# EUROPÄISCHE PATENTSCHRIFT

(11) **EP 3 027 548 B1**
(45) Veröffentlichungstag und Bekanntmachung des Hinweises auf die Patenterteilung: **21.02.2018**
(21) Anmeldenummer: 14757827.2
(22) Anmeldetag: 29.07.2014
(51) Int. Cl.: B66C 23/84, B66C 23/42, F16C 33/10

(54) **KRAN**
CRANE
GRUE

(30) Priorität: 31.07.2013 AT 2492013 U
(43) Veröffentlichungstag der Anmeldung: 08.06.2016
(73) Patentinhaber: Palfinger AG, 5101 Bergheim bei Salzburg (AT)
(72) Erfinder: WIMMER, Eckhard, A-5400 Hallein (AT); STEINDL, Hannes, A-5061 Elsbethen (AT); WINKLER, Jürgen, A-5165 Berndorf (AT); RÖCK, Christoph, A-5630 Bad Hofgastein (AT); HABERL, Walter, A-5151 Nussdorf (AT)
(74) Vertreter: Torggler & Hofinger Patentanwälte
(86) Internationale Anmeldenummer: PCT/AT2014/000150
(87) Internationale Veröffentlichungsnummer: WO 2015/013733

(56) Entgegenhaltungen:
- EP-A1- 2 570 700
- EP-A2- 1 489 037
- FR-A1- 2 181 616
- JP-A- 2008 232 270
- US-A- 4 002 377

## Beschreibung

Die Erfindung betrifft einen Kran mit einer um eine Achse drehbar gelagerten Kransäule mit den Merkmalen des Oberbegriffs des Anspruchs 1 sowie ein Fahrzeug mit einem solchen Kran.

Gattungsgemäße Kräne weisen oft zwei übereinander angeordnete Radiallager - meistens Gleitlager - auf, um eine Verbindung des Sockels mit der Kransäule herzustellen. Weiters ist für die Einleitung der Vertikalkräfte ein Axiallager angeordnet. Zwischen diesen beiden Radiallagern befindet sich oftmals die Antriebseinheit, die meist als Zahnstangenantrieb ausgeführt ist, mit der dafür erforderlichen Verzahnung am Kransäulenstumpf bzw. an der Zahnstange. Ein gattungsgemäßer Kran wird etwa in der US 4,002,377 A gezeigt.

Alle Lagerstellen und die Verzahnung müssen leichtgängig und gegen Korrosion geschützt sein. Sie werden daher meistens mit einem dafür geeigneten Fett geschmiert. Das kann über eine Zuführung an jeder einzelnen Stelle, oder über eine Zentralschmierung, bei welcher die einzelnen Schmierstellen meist durch Schläuche oder Leitungen in einem Block gesammelt werden, erfolgen. Ein Nachschmieren ist in definierten Zeitintervallen erforderlich. Eine gattungsfremde Drehvorrichtung mit solch einer Schmierung ist etwa in der EP 2 570 700 A1 gezeigt.

Aufgabe der Erfindung ist es, eine gegenüber dem Stand der Technik verbesserte Lagerung samt Antriebseinheit der Kransäule im Sockel anzugeben.

Diese Aufgabe wird durch eine Kransäule mit den Merkmalen des Anspruchs 1 und einem Fahrzeug nach Anspruch 13 gelöst. Vorteilhafte Ausführungsformen der Erfindung sind in den abhängigen Ansprüchen definiert.

Dadurch, dass für die Kransäule eine Antriebseinheit vorgesehen ist, die die Kransäule zwischen dem oberen Radiallager und dem unteren Radiallager antreibt, wobei eine Schmierung eines angetriebenen Bereichs an der Kransäule über die gemeinsame mit Öl befüllbare Kammer erfolgt, kann somit die Schmierung über ein und dieselbe Kammer für alle bewegten Teile erfolgen.
Dadurch, dass am oberen Radiallager eine mit Öl befüllbare Kammer vorgesehen ist, über die eine Schmierung des oberen Radiallagers erfolgt, kann auf ein immer wiederkehrendes Nachschmieren des oberen Radiallagers verzichtet werden, da diese Schmierung durch Öl, das sich in der Kammer befindet, selbsttätig erfolgt und somit eine dauerhafte Schmierung gewährleistet wird.

Als besonders vorteilhaft hat es sich herausgestellt, wenn am unteren Radiallager eine mit Öl befüllbare Kammer vorgesehen ist, über die eine Schmierung des unteren Radiallagers erfolgt. Somit kann auch für das untere Radiallager eine dauerhafte Schmierung erzielt werden.

Besonders bevorzugt ist dabei vorgesehen, dass eine Schmierung des unteren Radiallagers über die wenigstens eine mit Öl befüllbare Kammer erfolgt. Somit reicht eine mit Öl befüllbare Kammer aus, um beide Radiallager zu schmieren.

Eine weitere bevorzugte Ausführungsform sieht vor, dass wenigstens ein Axiallager für die Kransäule vorgesehen ist, wobei eine Schmierung des wenigstens einen Axiallagers der Kransäule über die mit Öl befüllbare Kammer erfolgt.

Gemäß einem bevorzugten Ausführungsbeispiel kann vorgesehen sein, dass eine gemeinsame mit Öl befüllbare Kammer für das obere Radiallager und für das untere Radiallager vorgesehen ist. Durch die Ausbildung einer gemeinsamen Kammer für das obere und für das untere Radiallager ist es nur einmal notwendig die Kammer mit Öl zu befüllen, um für beide Lager die Schmierung herzustellen.

Ebenso hat es sich als vorteilhaft herausgestellt, wenn die mit Öl befüllbare Kammer für das obere Radiallager im mit Öl befülltem Betriebszustand ein Ölniveau aufweist das höher liegt als ein oberes Ende des oberen Radiallagers. Dadurch kommt es zu einem bevorzugten Schmieren des oberen Radiallagers, da dieses Lager somit zur Gänze von Öl bedeckt ist.

Ein weiteres bevorzugtes Ausführungsbeispiel sieht vor, dass die wenigstens eine mit Öl befüllbare Kammer im Wesentlichen vollständig an dem die Kransäule lagernden Sockel ausgebildet ist.

Als besonders vorteilhaft hat es sich herausgestellt, wenn die wenigstens eine mit Öl befüllbare Kammer im Wesentlichen vollständig im Inneren der drehbaren Kransäule ausgebildet ist. Dadurch wird eine besonders platzsparende Variante geschaffen, da die befüllbare Kammer nicht außerhalb der Kransäule ausgebildet ist.

Gemäß einem bevorzugten Ausführungsbeispiel kann vorgesehen sein, dass wenigstens zwei mit Öl befüllbare Kammern vorgesehen sind, über die eine Schmierung des oberen Radiallagers erfolgt.

Weiters kann bevorzugt vorgesehen sein, dass die eine mit Öl befüllbare Kammer die andere mit Öl befüllbare Kammer mit Öl versorgt.

Dabei ist besonders bevorzugt vorgesehen, dass die wenigstens zwei mit Öl befüllbaren Kammern über einen Kanal miteinander verbunden sind.

Als vorteilhaft hat es sich weiters herausgestellt, dass eine der wenigstens zwei mit Öl befüllbaren Kammern oberhalb der anderen mit Öl befüllbaren Kammer ausgebildet ist.

Bevorzugt kann weiters vorgesehen sein, dass eine der wenigstens zwei mit Öl befüllbaren Kammern oberhalb des oberen Radiallagers ausgebildet ist.

Als besonders vorteilhaft hat es sich dabei herausgestellt, wenn der Kanal im Inneren der Kransäule ausgebildet ist.

Schutz wird auch begehrt für ein Fahrzeug mit einem Kran nach einer der beschriebenen Ausführungsformen.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:
- Fig. 1: eine Seitenansicht eines Fahrzeugs mit einem Kran
- Fig. 2: einen Schnitt durch eine Kransäule nach dem Stand der Technik
- Fig. 3: einen Schnitt durch eine weitere Kransäule nach dem Stand der Technik
- Fig. 4: einen Schnitt durch eine Kransäule mit einer mit Öl befüllbaren Kammer für das obere Radiallager, dabei sind die obere und untere Kammer verbunden, der Einfüll- bzw. Ausgleichsbehälter ist im oberen Bereich des Sockels angeordnet, das Ölniveau liegt dabei über dem oberen Lager
- Fig. 5: einen Schnitt durch eine Kransäule mit einer mit Öl befüllbaren Kammer für das obere Radiallager im Inneren der Kransäule

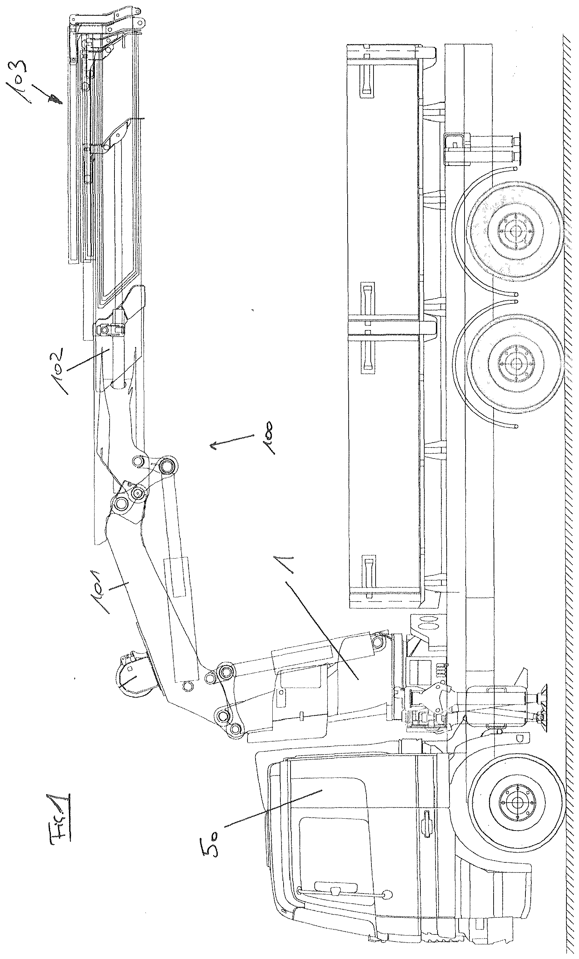

Figur 1 zeigt eine Seitenansicht eines Fahrzeuges 50. Am Fahrzeug 50 ist der Kran 100 montiert. Der Kran 100 weist dabei eine um eine Achse drehbar gelagerte Kransäule 1 auf. Von der Kransäule 1 weg erstreckt sich das Kranarmsystem mit einem ersten Ausleger 101 und einem zweiten Ausleger 102, welcher gelenkig mit dem ersten Ausleger 101 verbunden ist. In diesem bevorzugten Ausführungsbeispiel weist der zweite Ausleger 102 noch mehrere Auslegerverlängerungen 103 auf, um die Reichweite des Kranarmsystems zu erhöhen.

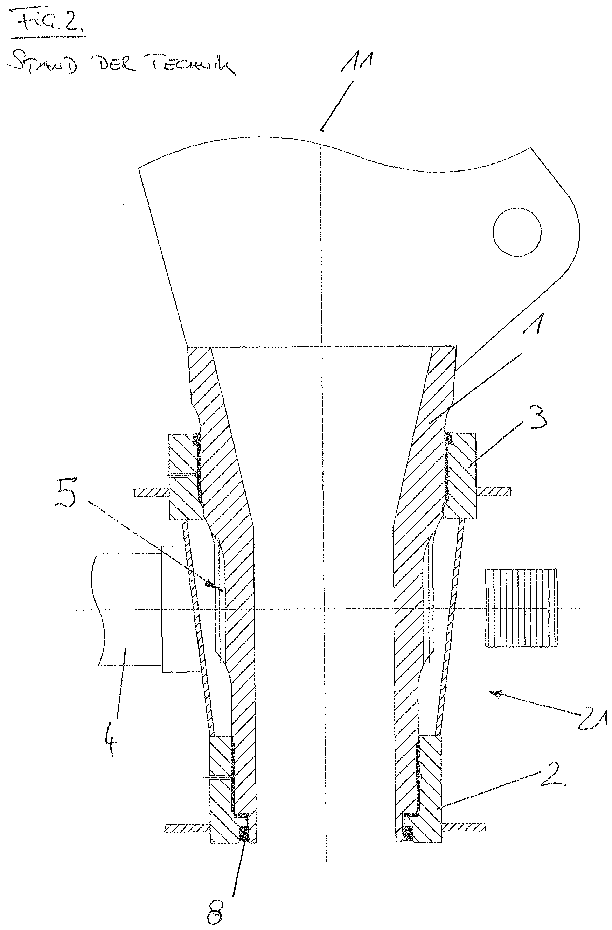

Figur 2 zeigt eine Schnittdarstellung durch eine Kransäule 1 nach dem Stand der Technik. Die Kransäule 1 weist ein unteres Radiallager 2 und ein oberes Radiallager 3 in einem feststehenden Sockel 21 auf. Weiters weist die Kransäule 1 eine Antriebseinheit 4 auf, die die Kransäule 1 bzw. dessen bewegbaren Teil antreibt. Beim angetriebenen Bereich 5 der Kransäule 1, als auch bei den beiden axial beabstandeten Radiallagern 2 und 3, ist hier beim Stand der Technik eine händische Fettzuführung notwendig, um den Betrieb der Kransäule 1 gewährleisten zu können.

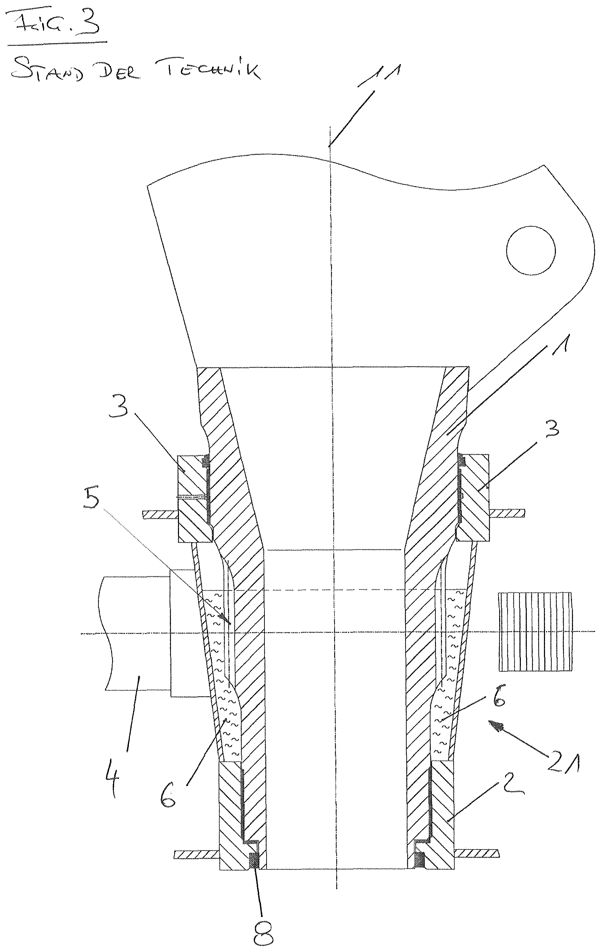

Alternativ ist es vom Stand der Technik her weiters bekannt, ein Ölbad für das untere Radiallager 2 auszubilden, wie dies in der Figur 3 dargestellt ist. Nachteilig ist hierbei, dass ebenfalls wiederum eine händische Fettzuführung für das obere Radiallager 3 benötigt wird, um einen reibungslosen Betrieb der Kransäule 1 zu gewährleisten.

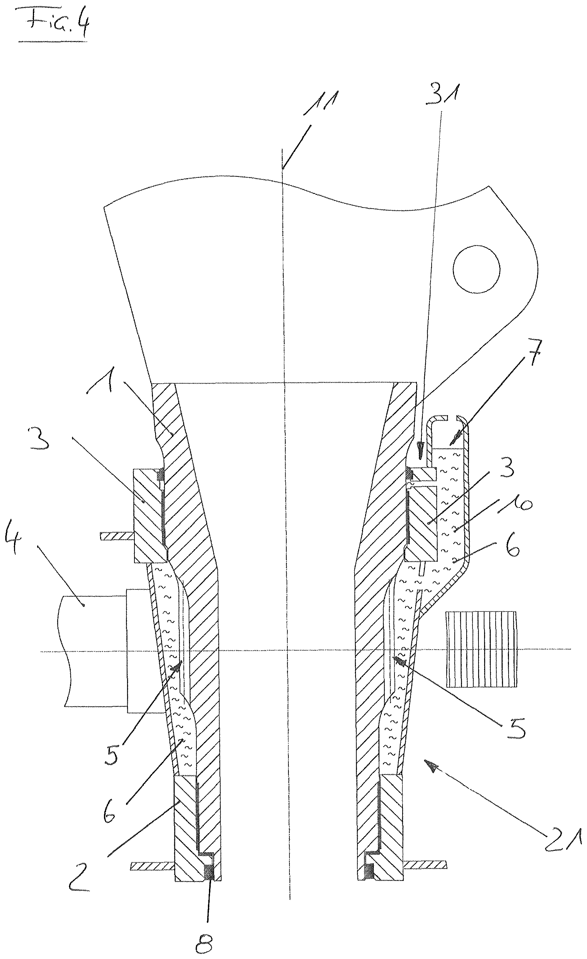

Figur 4 zeigt nun ein erfindungsgemäßes Ausführungsbeispiel einer Kransäule 1. Die Kransäule 1 weist auch hier wiederum ein unteres Radiallager 2 und ein vom unteren Radiallager 2 entlang der Achse 11 beabstandetes oberes Radiallager 3 im Sockel 21 auf. Am oberen Radiallager 3 ist die mit Öl 6 befüllbare Kammer 10 ausgebildet, wodurch eine automatische Schmierung des oberen Radiallagers 3 erfolgt.

In diesem Ausführungsbeispiel erstreckt sich die Kammer 10 nicht nur um das obere Radiallager 3 herum, sondern auch noch weiter hinunter bis zum unteren Radiallager 2. Somit kann durch eine einzige Kammer 10 eine gleichzeitige Schmierung des unteren Radiallagers 2, des durch die Antriebseinheit 4 angetriebenen Bereiches 5 der Kransäule 1 und des oberen Radiallagers 3 erreicht werden.

In diesem Ausführungsbeispiel ist die mit Öl 6 befüllbare Kammer 10 am Sockel 21 ausgebildet, der die Kransäule 1 lagert. Diese ist somit von außerhalb zugänglich und von außerhalb mit Öl befüllbar.

Durch die Erstreckung der Kammer 10 über den Antriebsbereich 5 und über beide Radiallager 2 und 3 hinweg erfolgt eine erfindungsgemäße Ausbildung, da so nur eine Kammer 10 gebaut werden muss um alle drei Teile zu schmieren und es auch nur einmal notwendig ist, Öl 6 in die Kammer 10 einzufüllen, um eine Schmierung zu gewährleisten. Somit kann sowohl Material als auch Zeit für die Wartungsarbeiten gespart werden.

Ebenfalls weist die Kransäule 1 in diesem Ausführungsbeispiel ein Axiallager 8 für die Kransäule 1 auf. Die Schmierung dieses Axiallagers 8 erfolgt ebenfalls über die mit Öl 6 befüllbare Kammer 10.

Weiters ist hier besonders bevorzugt vorgesehen, dass die mit Öl befüllbare Kammer 10 am oberen Radiallager 3 im mit Öl 6 befülltem Betriebszustand ein Ölniveau 7 aufweist, das höher liegt als ein oberes Ende 31 des oberen Radiallagers 3. Für die Antriebseinheit 4 ist bevorzugt ein Zahnstangenantrieb vorgesehen, mit der dafür erforderlichen Verzahnung am Kransäulenstumpf bzw. an der Zahnstange. In diesem bevorzugten Ausführungsbeispiel liegen somit alle Lagerstellen (unteres Radiallager 2, oberes Radiallager 3) als auch die Verzahnung im Öl 6 des Ölbad 9 der Kammer 10.

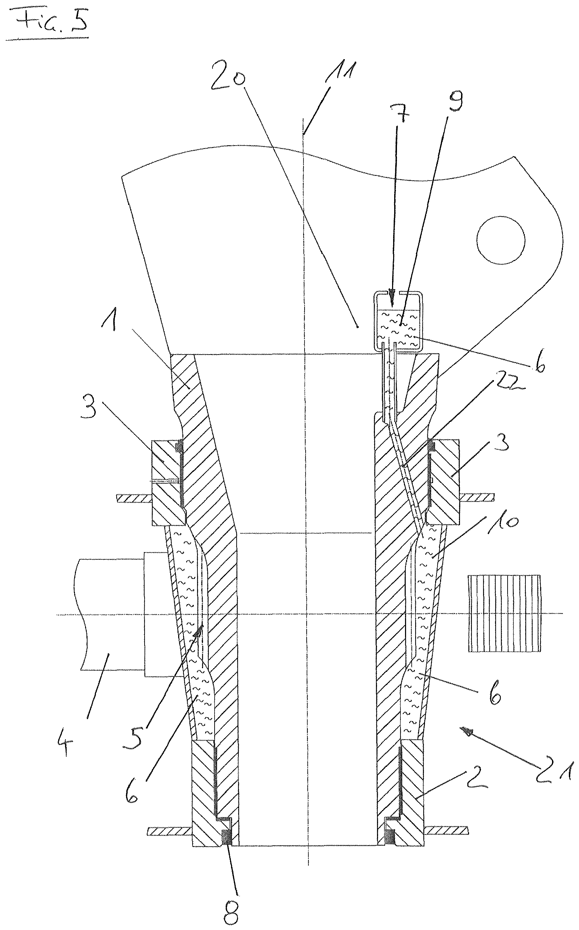

Figur 5 zeigt eine weitere Ausführungsvariante einer Kransäule 1 mit einer mit Öl 6 befüllbaren Kammer 10 bzw. 9.

Bei dieser Variante ist die mit Öl 6 befüllbare Kammer 9 im Wesentlichen vollständig im Inneren 20 der drehbaren Kransäule 1 ausgebildet. Dadurch wird eine besonders platzsparende Variante einer Kransäule 1 geschaffen. Um Öl 6 in die Kammer 9 zu füllen, ist eine nicht dargestellte Einfüllöffnung vorgesehen.

Dieses Ausführungsbeispiel weist zwei mit Öl 6 befüllbare Kammer 10 und 9 auf, über die die Schmierung des oberen Radiallagers 3, des unteren Radiallagers 2, des Axiallagers 8 und der Antriebseinheit 4 erfolgt. Dabei versorgt die mit Öl 6 befüllbare Kammer 9 die andere mit Öl 6 befüllbare Kammer 10, und zwar über den Kanal 22, welcher in diesem bevorzugten Ausführungsbeispiel ebenfalls im Inneren 20 der Kransäule 1 ausgebildet ist. Die mit Öl 6 befüllbare Kammer 9 liegt hierbei oberhalb der anderen mit Öl 6 befüllbaren Kammer 10 und auch oberhalb des oberen Radiallagers 3, wodurch es zu einer bevorzugten Versorgung mit Öl 6 für die Kammer 10 bzw. des oberen Radiallagers 3 kommt.

## Patentansprüche

1. Kran (100) mit einer um eine Achse (11) drehbar gelagerten Kransäule (1), mit
- einem in Montagelage der Kransäule (1) unteren Radiallager (2) zur Lagerung der drehbaren Kransäule (1) in einem Sockel (21) und
- einem vom unteren Radiallager (2) entlang der Achse (11) beabstandeten oberen Radiallager (3) zur Lagerung der Kransäule (1) im Sockel (21),
wobei wenigstens eine mit Öl (6) befüllbare Kammer (10, 9) zur Schmierung des oberen Radiallagers (3) vorgesehen ist,
**dadurch gekennzeichnet, dass** für die Kransäule (1) eine Antriebseinheit (4) vorgesehen ist, die die Kransäule (1) zwischen dem oberen Radiallager (3) und dem unteren Radiallager (2) antreibt, wobei eine Schmierung eines angetriebenen Bereichs (5) an der Kransäule (1) über die mit Öl (6) befüllbare Kammer (10, 9) erfolgt..

2. Kran nach Anspruch 1, **dadurch gekennzeichnet, dass** eine Schmierung des unteren Radiallagers (2) über die wenigstens eine mit Öl (6) befüllbare Kammer (10, 9) erfolgt.

3. Kran nach Anspruch 1 oder 2, **dadurch gekennzeichnet, dass** wenigstens ein Axiallager (8) für die Kransäule (1) vorgesehen ist, wobei eine Schmierung des wenigstens einen Axiallagers (8) der Kransäule (1) über die mit Öl (6) befüllbare Kammer (10, 9) erfolgt.

4. Kran nach einem der Ansprüche 1 bis 3, **dadurch gekennzeichnet, dass** die mit Öl (6) befüllbare Kammer (10, 9) für das obere Radiallager (3) im mit Öl (6) befülltem Betriebszustand ein Ölniveau (7) aufweist das höher liegt als ein oberes Ende (31) des oberen Radiallagers (3).

5. Kran nach einem der Ansprüche 1 bis 4, **dadurch gekennzeichnet, dass** die wenigstens eine mit Öl (6) befüllbare Kammer (10) im Wesentlichen vollständig an dem die Kransäule (1) lagernden Sockel (21) ausgebildet ist.

6. Kran nach einem der Ansprüche 1 bis 5, **dadurch gekennzeichnet, dass** die wenigstens eine mit Öl (6) befüllbare Kammer (9) im Wesentlichen vollständig im Inneren (20) der drehbaren Kransäule (1) ausgebildet ist.

7. Kran nach einem der Ansprüche 1 bis 6, **dadurch gekennzeichnet, dass** wenigstens zwei mit Öl (6) befüllbare Kammern (10, 9) vorgesehen sind, über die eine Schmierung des oberen Radiallagers (3) erfolgt.

8. Kran nach Anspruch 7, **dadurch gekennzeichnet, dass** die eine mit Öl (6) befüllbare Kammer (9) die andere mit Öl (6) befüllbare Kammer (10) mit Öl (6) versorgt.

9. Kran nach Anspruch 7 oder 8, **dadurch gekennzeichnet, dass** die wenigstens zwei mit Öl (6) befüllbaren Kammern (10, 9) über einen Kanal (22) miteinander verbunden sind.

10. Kran nach einem der Ansprüche 7 bis 9, **dadurch gekennzeichnet, dass** eine der wenigstens zwei mit Öl (6) befüllbaren Kammern (10, 9) oberhalb der anderen mit Öl (6) befüllbaren Kammer (10) ausgebildet ist.

11. Kran nach einem der Ansprüche 6 bis 8, **dadurch gekennzeichnet, dass** eine der wenigstens zwei mit Öl (6) befüllbaren Kammern (10, 9) oberhalb des oberen Radiallagers (3) ausgebildet ist.

12. Kran nach einem der Ansprüche 9 bis 11, **dadurch gekennzeichnet, dass** der Kanal (22) im Inneren (20) der Kransäule (1) ausgebildet ist.

13. Fahrzeug (50) mit einem Kran (100) mit einer um eine Achse (11) drehbar gelagerten Kransäule (1) nach einem der Ansprüche 1 bis 12.

## Claims

1. A crane (100) comprising a crane pillar (1) which is mounted rotatably about an axis (11), having
- a radial bearing (2) which is the lower radial bearing in the mounted position of the crane pillar (1) for mounting the rotatable crane pillar (1) in a base (21), and
- an upper radial bearing (3) spaced from the lower radial bearing (2) along the axis (11) for mounting the crane pillar (1) in the base (21),
wherein there is provided at least one chamber (10, 9) which can be filled with oil (6) for the lubrication of the upper radial bearing (3),
**characterised in that** provided for the crane pillar (1) is a drive unit (4) which drives the crane pillar (1) between the upper radial bearing (3) and the lower radial bearing (2), wherein lubrication of a driven region (5) at the crane pillar (1) is effected by way of the chamber (10, 9) which can be filled with oil (6).

2. A crane as set forth in claim 1 **characterised in that** lubrication of the lower radial bearing (2) is effected by way of the at least one chamber (10, 9) which can be filled with oil (6).

3. A crane as set forth in claim 1 or claim 2 **characterised in that** there is provided at least one thrust bearing (8) for the crane pillar (1), wherein lubrication of the at least one thrust bearing (8) of the crane pillar (1) is effected by way of the chamber (10, 9) which can be filled with oil (6).

4. A crane as set forth in one of claims 1 through 3 **characterised in that** the chamber (10, 9) which can be filled with oil (6) for the upper radial bearing (3) in the operative condition of being filled with oil (6) has an oil level (7) which is higher than an upper end (31) of the upper radial bearing (3).

5. A crane as set forth in one of claims 1 through 4 **characterised in that** the at least one chamber (10) which can be filled with oil (6) is provided substantially completely at the base (21) supporting the crane pillar (1).

6. A crane as set forth in one of claims 1 through 5 **characterised in that** the at least one chamber (9) which can be filled with oil (6) is provided substantially completely in the interior (20) of the rotatable crane pillar (1).

7. A crane as set forth in one of claims 1 through 6 **characterised in that** there are provided at least two chambers (10, 9) which can be filled with oil (6) and by way of which lubrication of the upper radial bearing (3) is effected.

8. A crane as set forth in claim 7 **characterised in that** the chamber (9) which can be filled with oil (6) supplies oil (6) to the other chamber (10) which can be filled with oil (6).

9. A crane as set forth in claim 7 or claim 8 **characterised in that** the at least two chambers (10, 9) which can be filled with oil (6) are connected together by way of a passage (22).

10. A crane as set forth in one of claims 7 through 9 **characterised in that** one of the at least two chambers (10, 9) which can be filled with oil (6) is provided above the other chamber (10) which can be filled with oil (6).

11. A crane as set forth in one of claims 6 through 8 **characterised in that** one of the at least two chambers (10, 9) which can be filled with oil (6) is provided above the upper radial bearing (3).

12. A crane as set forth in one of claims 9 through 11 **characterised in that** the passage (22) is provided in the interior of the crane pillar (1).

13. A vehicle (50) having a crane (100) comprising a crane pillar (1) mounted rotatably about an axis (11) as set forth in one of claims 1 through 12.

## Revendications

1. Grue (100) avec une colonne de grue (1) logée de façon rotative autour d'un axe (11), avec
- un palier radial inférieur (2) en position de montage de la colonne de grue (1) pour loger la colonne de grue rotative (1) dans un socle (21) et
- un palier radial supérieur (3) espacé du palier radial inférieur (2) le long de l'axe (11) pour loger la colonne de grue (1) dans le socle (21),
dans laquelle est prévue au moins une chambre (10, 9) pouvant être remplie d'huile (6) pour lubrifier le palier radial supérieur (3), **caractérisée en ce que** pour la colonne de grue (1) est prévue une unité d'entraînement (4), qui entraîne la colonne de grue (1) entre le palier radial supérieur (3) et le palier radial inférieur (2), dans laquelle une lubrification d'une zone entraînée (5) est réalisée sur la colonne de grue (1) par la chambre (10, 9) pouvant être remplie d'huile (6).

2. Grue selon la revendication 1, **caractérisée en ce qu'**une lubrification du palier radial inférieur (2) est réalisée par la au moins une chambre (10, 9) pouvant être remplie d'huile (6).

3. Grue selon la revendication 1 ou 2, **caractérisée en ce qu'**au moins un palier axial (8) est prévu pour la colonne de grue (1), dans lequel une lubrification du au moins un palier axial (8) de la colonne de grue (1) est réalisée par la chambre (10, 9) pouvant être remplie d'huile (6).

4. Grue selon l'une des revendications 1 à 3, **caractérisée en ce que** la chambre (10, 9) pouvant être remplie d'huile (6) pour le palier radial supérieur (3) présente, dans l'état de fonctionnement rempli d'huile (6), un niveau d'huile (7) qui est situé plus haut qu'une extrémité supérieure (31) du palier radial supérieur (3).

5. Grue selon l'une des revendications 1 à 4, **caractérisée en ce que** la au moins une chambre (10) pouvant être remplie d'huile (6) est conçue essentiellement complètement sur le socle (21) logeant la colonne de grue (1).

6. Grue selon l'une des revendications 1 à 5, **caractérisée en ce que** la au moins une chambre (9) pouvant être remplie d'huile (6) est conçue essentiellement complètement à l'intérieur (20) de la colonne de grue rotative (1).

7. Grue selon l'une des revendications 1 à 6, **caractérisée en ce que** sont prévues au moins deux chambres (10, 9) pouvant être remplies d'huile (6), au moyen desquelles est réalisée une lubrification du palier radial supérieur (3).

8. Grue selon la revendication 7, **caractérisée en ce qu'**une chambre (9) pouvant être remplie d'huile (6) approvisionne en huile (6) l'autre chambre (10) pouvant être remplie d'huile (6).

9. Grue selon la revendication 7 ou 8, **caractérisée en ce que** les au moins deux chambres (10, 9) pouvant être remplies d'huile (6) sont reliées ensemble par un canal (22).

10. Grue selon l'une des revendications 7 à 9, **caractérisée en ce que** l'une des au moins deux chambres (10, 9) pouvant être remplies d'huile (6) est conçue au-dessus de l'autre chambre (10) pouvant être remplie d'huile (6).

11. Grue selon l'une des revendications 6 à 8, **caractérisée en ce que** l'une des au moins deux chambres (10, 9) pouvant être remplies d'huile (6) est conçue au-dessus du palier radial supérieur (3).

12. Grue selon l'une des revendications 9 à 11, **caractérisée en ce que** le canal (22) est conçu à l'intérieur (20) de la colonne de grue (1).

13. Véhicule (50) avec une grue (100) avec une colonne de grue (1) logée de façon rotative autour d'un axe (11) selon l'une des revendications 1 à 12.
